Europäisches Patentamt

European Patent Office

Office européen des brevets

(11) Numéro de publication: **0 323 330**
**A1**

## (12) DEMANDE DE BREVET EUROPEEN

(21) Numéro de dépôt: **88403296.2**

(22) Date de dépôt: **22.12.88**

(51) Int. Cl.⁴: **B 29 C 45/28**

(30) Priorité: **24.12.87 FR 8718173**

(43) Date de publication de la demande:
**05.07.89 Bulletin 89/27**

(84) Etats contractants désignés:
**BE CH DE ES GB GR IT LI**

(71) Demandeur: **DELTA PROJET Société à Responsabilité Limitée dite:**
**2, rue Paul Appel**
**F-95310 Saint-Ouen-L'Aumone (FR)**

(72) Inventeur: **Leonard, Roland**
**16 avenue Pascal**
**F-78600 Maisons-Lafitte (FR)**

**Ramond, Louis**
**10, Chemin Dupuis Vert**
**F-95000 Cergy (FR)**

(74) Mandataire: **Wagret, Jean-Michel et al**
**Propi Conseils 23 rue de Léningrad**
**F-75008 Paris (FR)**

(54) **Buse de moule pour injection de matière plastique.**

(57) - Buse de moule pour injection de matière plastique, constitué d'un corps cylindrique formant manchon, associé à des moyens de chauffage et intégré dans un logement récepteur prévu dans l'épaisseur d'un moule, la buse débouchant par un orifice aval dans l'empreinte et étant apte à recevoir par son orifice amont, opposé au précédent, le flux de matière injectée depuis la buse de presse, et la buse de moule est caractérisée en ce qu'elle est constituée d'un premier manchon cylindrique fixe (3), immobilisé sur la paroi du moule et comportant ledit orifice amont pour l'entrée de la matière, et la buse comporte un second manchon mobile (4), colinéaire au premier, et monté à coulissement télescopique à l'intérieur du premier manchon, l'extrémité (5) de ce second manchon, opposée à l'extrémité engagée dans le premier manchon, venant en butée contre la paroi (9) du logement récepteur (8) prévu dans l'épaisseur du moule (2), la pression de la matière injectée (4) tendant ainsi à plaquer l'extrémité de ce manchon coulissant contre la paroi (9) du logement en assurant l'étanchéité de l'ensemble.

EP 0 323 330 A1

**Description**

### Buse de moule pour injection de matière plastique.

La présente invention concerne une buse traversant les parois d'un moule destiné à recevoir une injection de matière synthétique à l'état plastique.

L'invention concerne plus spécialement une buse destinée à être mise en place sur un moule, en traversant l'épaisseur du moule, une extrémité amont de la buse étant raccordée à la machine d'injection, telle qu'une presse à injecter et étant apte à recevoir le flux de matière plastique à l'état pâteux, la buse traversée par un canal longitudinal, débouchant à l'intérieur du moule par un orifice d'entrée aval permettant ainsi à la matière injectée depuis la presse, de pénétrer à l'intérieur de l'espace vide défini par le moule et qui, une fois rempli de la matiére refroidie, constitue l'objet moulé.

De telles buses sont généralement pourvues d'une collerette qui déborde sur la paroi extérieure du moule, collerette par laquelle la buse est fixée sur le moule.

Et la collerette entoure l'orifice amont par lequel la buse de moule est amenée au contact direct de la buse d'injection située sur la presse.

La buse se présente d'une façon générale sous forme d'un corps généralement cylindrique traversant un logement disposé dans l'épaisseur des parois du moule pour venir déboucher par l'extrémité aval à l'intérieur du moule, au niveau de l'empreinte ou du plan de joint.

La buse est associée à des moyens de réchauffement qui permettent de maintenir la température de la matière injectée dans les limites nécessaires jusqu'à ce que cette matière ait pénétré à l'intérieur du moule, en évitant un refroidissement entraînant un début de solidification de la matière avec des inconvénients évidents tant au niveau du fonctionnement rhéologique de l'ensemble qu'au niveau de la répartition de la matière moulée au sein du moule.

Les buses de moule mises en place dans l'épaisseur d'un moule doivent donc dans le cadre des techniques actuellement connues, être prévues avec des dimensions leur permettant d'une part de venir en appui par leur collerette extérieure sur la paroi extérieure du moule, tout en venant par leur orifice d'entrée dans le moule, au contact du fond du logement récepteur, fond comportant un débouché dans l'intérieur du moule.

Ces buses doivent donc être ajustées de façon extrêmement précise de façon à ce que leur longueur, lorsque la collerette est en appui sur la surface extérieure du moule, permettre à l'extrémité opposée de venir en contact d'étanchéité avec le fond du logement récepteur.

On voit que ces caractéristiques sont difficiles à réaliser, d'autant qu'il est nécessaire de tenir compte de la dilatation qui affecte nécessairement le conduit et la paroi de la buse, lorsque cette dernière est traversée par le flux de matière plastique à une température de l'ordre de 150 à 350° C.

La présente invention concerne une buse perfectionnée qui présente des avantages considérables par rapport au système antérieur.

Un premier objet de l'invention est de réaliser une buse permettant de s'adapter à des dimensions variables de logement récepteur c'est-à-dire à des épaisseurs variables de moule.

Un autre objet de l'invention est de réaliser une buse qui permette d'assurer un réchauffement efficace et complet de la matière jusqu'à sa pénétration à l'intérieur du moule, en évitant toute zone de refroidissement.

Cette caractéristique est particulièrement précieuse dans le cas, de plus en plus fréquent où l'on utilise une matière de moulage constituée d'un mélange de résine.

Il peut être avantageux de mouler un produit particulier avec non pas une résine homogène mais un mélange de plusieurs résines chacune apportant ses caractéristiques spécifiques.

Cependant il faut tenir compte du fait que chaque résine a une plage d'utilisation particulière qui est définie par la gamme de température entre la température de ramollissement de la résine et la température de décomposition ; cette plage peut parfois être relativement étroite et tenir sur quelques dizaines de degrés.

Dans le cas de deux résines en mélange, il est nécessaire d'utiliser ce mélange dans le créneau, éventuellement très étroit, de température dans lequel les deux composants sont chacun à l'intérieur de leurs gammes de température utile (entre ramollissement et décomposition).

Dans ces conditions il est intéressant de disposer d'une buse qui permette d'ajuster et de régler de façon pointue et jusqu'à la zône d'entrée dans l'empreinte, la température de la matière injectée.

Un autre objet de l'invention est de permettre d'obtenir une étanchéité automatique, constante et parfaite entre l'orifice aval de la buse, sensiblement au débouché du logement récepteur vers l'intérieur du moule, et la paroi de ce logement mise en correspondance.

L'invention permet encore d'obtenir une adaptation de la buse à des conditions spécifiques à chaque utilisation par exemple à des diamètres de passage, permettant des débits de matière selon des valeurs différentes.

A cet effet selon l'invention on a prévu une buse de moule pour injection de matière plastique, constitué d'un corps cylindrique formant manchon, associé à des moyens de chauffage et intégré dans un logement récepteur prévu dans l'épaisseur d'un moule, la buse débouchant par un orifice aval à l'intérieur du moule et étant apte à recevoir par son orifice amont, opposé au précédent, le flux de matière injectée depuis la buse de presse, et la buse de moule est caractérisée en ce qu'elle est constituée d'un premier manchon cylindrique fixe, immobilisé sur la paroi du moule et comportant ledit orifice amont pour l'entrée de la matière, cet orifice étant apte à recevoir en appui l'extrémité d'injection de la buse de presse, et la buse comporte un second manchon mobile, colinéaire au premier, et monté à coulissement télescopique à l'intérieur du premier manchon, l'extrémité de ce second manchon, opposée à l'extrémité engagée dans le premier manchon, venant en butée contre la paroi du logement récepteur prévu dans l'épaisseur du moule et constituant le débouché de sortie de la matière moulée dans l'empreinte, la pression de la matière injectée s'exerçant sur la section amont du second manchon coulissant tendant ainsi à plaquer l'extrémité opposée de ce manchon coulissant contre la paroi du logement en assurant l'étanchéité de l'ensemble.

Selon une autre caractéristique, l'extrémité tronconique ou second manchon, opposée à l'extrémité engagée dans le premier manchon, comporte un angle de valeur inférieure à l'angle constitué par l'extrémité tronconique du logement récepteur, sur lequel ladite extrémité du manchon vient en appui, le cône terminal du manchon coulissant venant ainsi en contact circulaire avec la paroi intérieure tronconique du logement en assurant une étanchéité et un auto-centrage automatique d'une paroi sur l'autre.

Selon une autre caractéristique le manchon fixe comporte, de façon connue en soi, dans sa partie débordant au-delà de la paroi du moule une collerette de diamètre supérieur au diamètre du logement récepteur, ladite collerette étant fixée sur la paroi extérieure du moule.

Selon une autre caractéristique l'ouverture aval de la buse, disposée à l'extrémité aval du manchon coulissant, comporte un voile transversal situé selon un diamètre du canal intérieur traversant ledit manchon, et ce voile est prolongé jusqu'au débouché du logement récepteur de la buse dans l'espace intérieur du moule, ledit voile transversal permettant la transmission des calories depuis la paroi dudit manchon coulissant aux filets de matière en cours d'injection et pénétrant à l'intérieur de l'empreinte.

Selon une caractéristique de l'invention le manchon fixe comporte intérieurement un alèsage cylindrique formant chambre dans laquelle coulisse une extrémité du manchon coulissant, cette chambre comportant une section de diamètre supérieur au diamètre de la circonférence définissant la zone de contact de la pointe aval du manchon coulissant sur la paroi tronconique définissant le fond du logement récepteur de la buse.

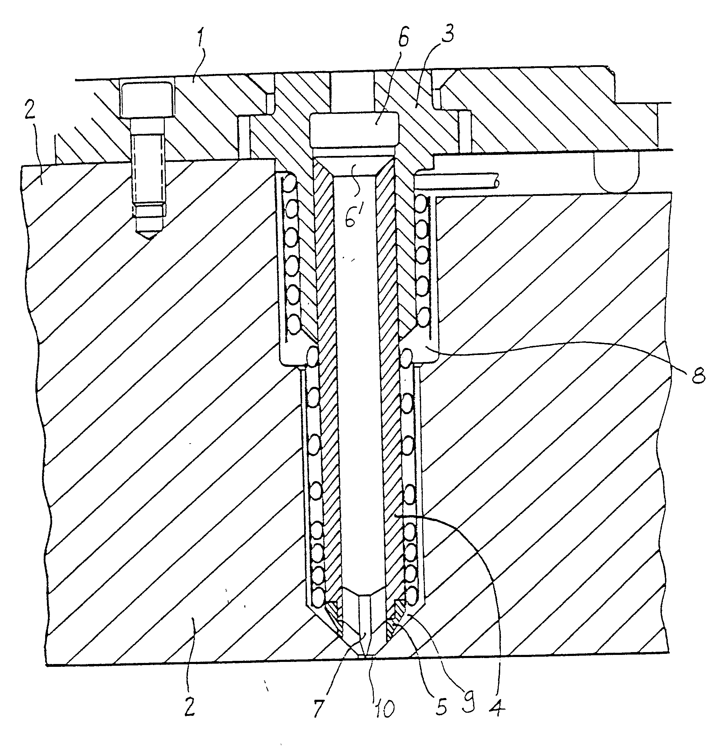

D'autres caractéristiques et avantages de l'invention ressortiront de la description qui suit et qui est donnée en rapport avec une forme de réalisation présentée à titre d'exemple non limitatif et en se référant à la figure annexée.

On voit selon la figure que sur le moule 2, est monté, par l'intermédiaire de la collerette 1, la partie fixe 3 de la buse constituant le manchon fixe.

Dans la chambre 6 constituant l'alèsage intérieur de ce manchon coulissant, est monté mobile et à coulissement le manchon mobile 4 coulissant à l'intérieur de la chambre 6 et dont l'extrémité aval 5 est de forme générale tronconique.

L'ensemble de la buse est disposé à l'intérieur du logement 8 dont la partie inférieure 9 forme une paroi tronconique débouchant en son centre dans l'espace intérieur du moule 2.

On a prévu au niveau de la pointe tronconique 5, un voile transversal 7 disposé dans le canal 10 suivant un diamètre dudit canal cylindrique ; ce voile se prolonge vers le bas jusqu'au niveau du débouché du fond tronconique 9 du logement 8 à l'intérieur de l'espace de l'empreinte.

La paroi extérieure du manchon coulissant 4 est pourvue, de façon non représentée, de résistance qui permet le chauffage de la buse et le maintien du flux de matière à une température convenable ; le voile 7 transmet ainsi les calories depuis les parois du manchon coulissant 4, jusqu'au sein des filets de matière en cours d'écoulement et qui pénètre dans le moule.

On voit que la section transversale 6' du manchon coulissant, disposé à l'intérieur de la chambre 6, comporte une section sur laquelle s'exerce la pression de la matière provenant de la presse ; et cette section est supérieure à la section d'écoulement de la matière au sein du canal 10.

La section transversale 6' est en biseau tronconique femelle, et la force s'exerçant sur cette face comporte ainsi une composante radiale centrifuge qui tend à plaquer le haut du manchon coulissant sur l'alèsage récepteur formé par le manchon fixe.

En outre la pression différentielle positive provoque le placage automatique de la pointe 5 sur la paroi tronconique réceptrice 9 en assurant ainsi une étanchéité automatique des deux zones en contact.

Et cette étanchéité est d'autant mieux assurée que le contact de la pointe tronconique 5, sur la face tronconique, d'angle plus élevé, 9 permet un contact selon une zone circulaire à autocentrage automatique.

Dans ces conditions on obtient au niveau de la buse de moule une étanchéité parfaite obtenue automatiquement sans calcul et s'adaptant à diverses valeurs d'épaisseur du moule, la longueur de la buse s'adaptant automatiquement à la longueur du logement dans lequel elle est insérée.

On voit que dans ces conditions une buse selon l'invention peut s'adapter à une gamme de logements récepteurs de longueur variable.

Il n'est plus ainsi nécessaire de prévoir une buse rigoureusement ajustée aux dimensions du logement récepteur ; l'ajustement peut être très approximatif et comporter des tolérances très larges puisque automatiquement la pression de la matière injectée va rattraper le jeu et permettre de plaquer le manchon coulissant dans le fond du logement en assurant ainsi l'étanchéité au passage de la matière.

Pareillement il n'y a plus dans le cadre de la mise en oeuvre de l'invention à se préoccuper de problème de dilatation lors de l'arrivée de la matière et de son passage dans la buse, la dilatation éventuelle étant rattrapée automatiquement par un mouvement du manchon coulissant à l'intérieur du manchon fixe 3.

**Revendications**

1 - Buse de moule pour injection de matière plastique, constitué d'un corps cylindrique formant manchon, associé à des moyens de chauffage et intégré dans un logement récepteur prévu dans l'épaisseur d'un moule, la buse débouchant par un orifice aval dans l'empreinte et étant apte à recevoir par son orifice amont, opposé au précédent, le flux de matière injectée depuis la buse de presse, et la buse de moule est caractérisée en ce qu'elle est constituée d'un premier manchon cylindrique fixe (3), immobilisé sur la paroi du moule et comportant ledit orifice amont pour l'entrée de la matière, cet orifice étant apte à recevoir en appui l'extrémité d'injection de la buse de presse, et la buse comporte un second manchon mobile (4), colinéaire au premier, et monté à coulissement télescopique à l'intérieur du premier manchon, l'extrémité (5) de ce second manchon, opposée à l'extrémité engagée dans le premier manchon, venant en butée contre la paroi (9) du logement récepteur (8) prévu dans l'épaisseur du moule (2) et constituant le débouché de sortie de la matière moulée dans le moule, la pression de la matière injectée s'exerçant sur la section amont (6') du second manchon coulissant (4) tendant ainsi à plaquer l'extrémité opposée (5) de ce manchon coulissant contre la paroi (9) du logement en assurant l'étanchéité de l'ensemble.

2 - Buse de moule selon la revendication 1, caractérisée en ce que l'extrémité tronconique (5) du second manchon (4), opposée à l'extrémité engagée dans le premier manchon, comporte un angle de valeur inférieure à l'angle constitué par l'extrémité tronconique (9) du logement récepteur (8), sur lequel ladite extrémité du manchon vient en appui, le cône intérieur du manchon coulissant venant ainsi en contact circulaire avec la paroi intérieure tronconique du logement en assurant une étanchéité et un auto-centrage automatique d'une paroi sur l'autre.

3 - Buse selon l'une des revendications 1 ou 2, caractérisée en ce que le manchon fixe (3) comporte, de façon connue en soi, dans sa partie débordant au-delà de la paroi du moule une collerette (1) de diamètre supérieur au diamètre du logement récepteur, ladite collerette étant fixée sur la paroi extérieure du moule.

4 - Buse selon l'une des revendications 1,2 ou 3, caractérisée en ce que l'ouverture aval de la buse, disposée à l'extrémité aval du manchon coulissant, comporte un voile transversal (7) situé selon un diamètre du canal intérieur (10) traversant ledit manchon, et ce voile est prolongé jusqu'au débouché du logement (8) récepteur de la buse dans l'espace intérieur du moule, ledit voile transversal permettant la transmission des calories depuis la paroi dudit manchon coulissant aux filets de matière en cours d'injection et pénétrant à l'intérieur du moule.

5 - Buse selon l'une des revendications 1,2,3 ou 4, caractérisée en ce que le manchon fixe (3) comporte intérieurement un alèsage cylindrique (6) formant chambre dans laquelle coulisse une extrémité du manchon coulissant (4), cette chambre comportant une section de diamètre supérieur au diamètre de la circonférence définissant la zone de contact de la pointe aval (5) du manchon coulissant sur la paroi tronconique (9) définissant le fond du logement récepteur de la buse.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 553 788 (PUTKOWSKI) * Colonne 5, ligne 15 - colonne 6, ligne 30; figure 7 * | 1,3,5 | B 29 C  45/28 |
| Y | | 4 | |
| Y | US-A-3 677 682 (PUTKOWSKI) * Colonne 7, lignes 25-54; figure 13 * | 1 | |
| A | | 2 | |
| Y | US-A-3 843 295 (GREENBERG) * Colonne 2, lignes 50-65; colonne 6, lignes 26-31; figure 5 * | 1 | |
| Y | US-A-4 279 588 (GELLERT) * En entier * | 4 | |

DOMAINES TECHNIQUES RECHERCHES (Int. Cl.4)

B 29 C

Le présent rapport a été établi pour toutes les revendications

| Lieu de la recherche | Date d'achèvement de la recherche | Examinateur |
|---|---|---|
| LA HAYE | 28-03-1989 | BOLLEN J.A.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

&: membre de la même famille, document correspondant

EPO FORM 1503 03.82 (P0402)